# EUROPEAN PATENT SPECIFICATION

(11) **EP 0 238 708 B1**
(45) Date of publication and mention of the grant of the patent: **14.04.1993**
(21) Application number: 86109637.8
(22) Date of filing: 14.07.1986
(51) Int. Cl.: B23Q 1/18, B23Q 1/26

(54) **Movable table**
Beweglicher Tisch
Table mobile

(30) Priority: 15.07.1985 JP 155426/85
(43) Date of publication of application: 30.09.1987
(73) Proprietor: MATSUSHITA ELECTRIC INDUSTRIAL CO., LTD., Kadoma-shi, Osaka-fu, 571 (JP)
(72) Inventor: Hikita, Osamu, Toyonaka City, 560 (JP); Jin, Keiichi, Hirakata City, 573 (JP)
(74) Representative: Dr. Elisabeth Jung Dr. Jürgen Schirdewahn Dipl.-Ing. Claus Gernhardt

(56) References cited:
- EP-A- 0 128 871
- DE-A- 2 800 318
- FR-A- 653 295
- FR-A- 2 261 848
- US-A- 1 367 802
- PATENT ABSTRACTS OF JAPAN, vol. 5, no. 170 (M-94)[842], 29th October 1981; & JP-A-56 95 555 (FUJITSU K.K.) 03-08-1981
- PATENT ABSTRACTS OF JAPAN, vol. 7, no. 291 (M-265)[1436], 27th December 1983; & JP-A-58 163 819 (TOKYO SHIBAURA DENKI K.K.) 28-09-1983

## Description

The present invention relates to a movable table, and particularly pertains to a movable table widely used for general industrial equipments such as a machine tool.

### DESCRIPTION OF THE RELATED ART

Recently, a movable table is used for various industrial equipments such as a machine tool and an industrial robot, and demand therefor has rapidly increased. In the following, a related art to the movable table is described with reference to the drawings.

A conventional movable table has a construction as shown in the unexamined patent application JP-A-59-137616. Such table is shown in Figs. 5 and 6.

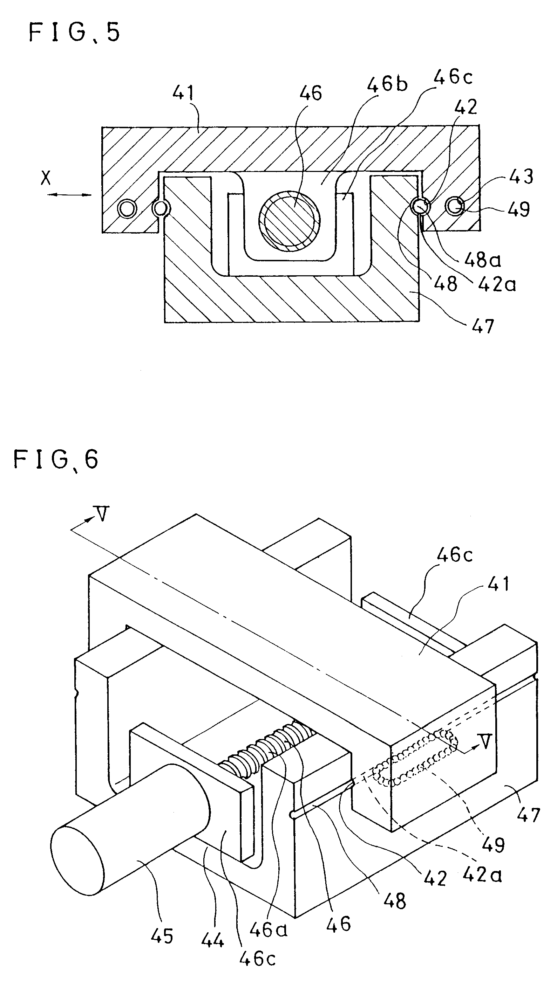

In Fig. 5 and Fig. 6, a movable block 41 has a pair of ball or roller (hereinafter merely refer to as ball) travelling grooves 42,42 on inner side of both vertical protrusions and a pair of ball circulation passages 43 bored in both vertical protrusions. A driving system 44 comprises a motor 45 for giving a driving force to the movable block 41 through a ball thread 46 comprising a screw bolt 46a, nut part 46b and a screw bolt bearing 46c. A fixed base 47 containing the screw bolt 46a of ball thread 46 has a pair ball travelling grooves 48, 48 which form a pair of ball travelling passages 42a in together with the ball travelling grooves 42, 42 provided on the movable block 41. And balls 49 inserted in each other facing ball travelling passages 42a, 42a operate as balls for a ball-and-roller bearing used for a rectilinear motion. In the movable table having the above-mentioned constitution, the movable block 41 is given a rectilinear motion by shifting a rotary motion of the motor 45 into a rectilinear motion by use of the ball thread 46.

However, in the above-mentioned conventional movable table, the fixed base 47 has a U shape in cross section to contain the ball thread 46 therein. The movable block 41 also has U shape in cross section to be provided with the ball travelling grooves 42 on its both side parts: that is, both of the fixed base 47 and the movable block 41 have U shape in cross-sectional figure. And therefore, rigidity against external force in the direction of X indicated by arrow is inferior to rigidities against the external force from the other directions, and deflection thereof is liable to be caused. Accordingly, when pre-load is given between the balls 49 and the ball travelling grooves 42 and 48, and the external forces from various directions are applied on the movable block 41, a component force pressing both side parts of the movable block 41 in outward direction is produced. And therefore, both side parts of the movable block 41 are opened in outward direction. On the other hand, a component force in horizontal and inward direction is applied on both side parts of the fixed base 47 having the ball travelling grooves 48 through tile balls 49. And therefore, a spacing between ball travelling grooves 42, 48 and balls 49 is produced thereby to disabling smooth sliding action of the movable block 41. Thus, it is difficult to make it in a proper pre-loaded state.

The present invention aims at solving the above-mentioned problems pointed out with respect to the prior art, and has for its object to provide an improved movable table having a strength capable of accepting a pre-load between ball or roller of a bail-and-roller bearing and travelling groove thereof, and to prevent a generation of spacing between the ball or roller and the travelling groove thereof, even when external force is applied on a movable block.

According to the invention there is provided a movable table comprising a guide rail extending in horizontal direction and being positioned in a straight opening of a block movable along said guide rail, linear bearing means provided between the vertical side surfaces of the guide rail and the opposing vertical side surfaces of said block, said block being movable by driving means through power transmitting means positioned in said block, characterized in that said movable block is generally rectangular having a hole in the moving direction thereof in which the power transmitting means is positioned, and comprising an upper part and a lower part giving enough strength to prevent bending of both sides of said block, said straight opening receiving said guide rail is formed in said lower part of said block, and that said guide rail is a solid body not having hollow parts.

In the movable table of the present invention the movable block has a hollow rectangle shape in cross section having a lower part connecting both side parts. And, therefore, when a pre-load is applied on the linear bearing means and an external force acts on the movable block, the side parts thereof do not bend in outward direction.

### BRIEF DESCRIPTION OF THE DRAWINGS

FIG.1 is a sectional view showing a movable table as an embodiment of the present invention, and FIG.2 is a perspective view thereof.

FIG.3 is a sectional view showing a movable table as another embodiment of the present invention, and FIG.4 is a perspective view thereof.

FIG.5 is a sectional view showing a conventional movable table, and FIG.6 is a perspective view thereof.

### DESCRIPTION OF THE PREFERRED EMBODIMENTS

In the following, an embodiment of the present invention is described with reference to the drawings.

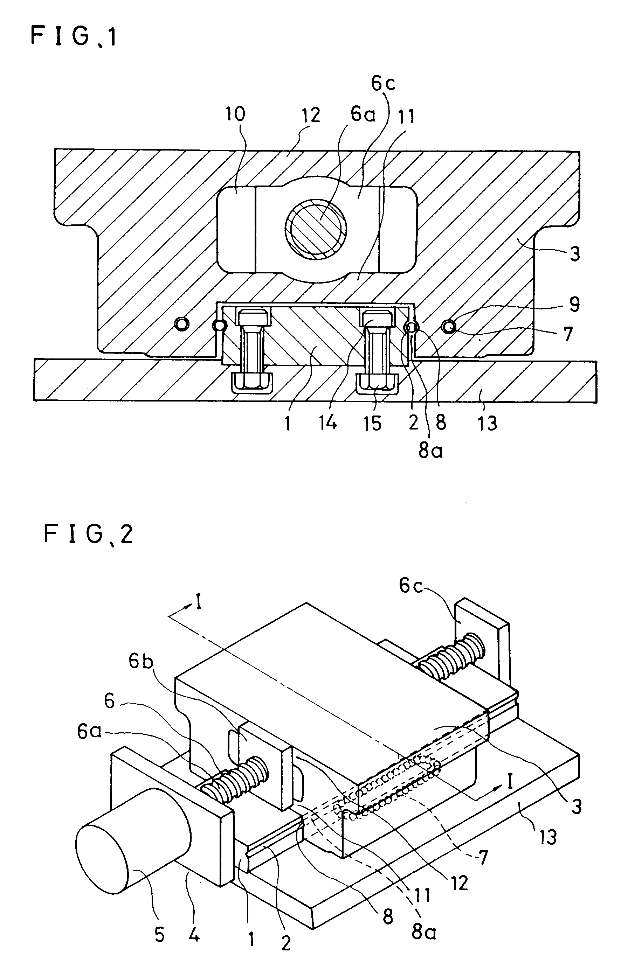

In FIG. 1 and FIG. 2, guide rail 1 has a pair of streight and parallel ball travelling grooves 2 for holding and enabling travelling of balls therein. A movable block 3 slides along with the guide rail 1 in the same direction as the ball travelling grooves 2. A driving system 4 comprises a motor 5 and a ball thread 6 comprising a screw bolt 6a, nut part 6b and a screw bolt bearing 6c. Both sides of the movable block 3 has ball travelling grooves 8 forming ball travelling passage 8a in cooperation with the ball travelling grooves 2, and ball circulation passages 9. This ball circulation passages 9 hold and circulate balls 7. And a ball-and-roller bearing for rectilinear motion is constructed of the guide rail 1, movable block 3 and balls 7. The movable block 3 has a hole 10 in which the ball thread 6 is inserted. The movable block 3 has an upper part 12 and a lower part 11 around the hole 10, and both sides give enough strength to prevent a bending thereof. The guide rail 1 is fixed to a fixed base 13 with bolts 14 and nuts 15.

Operation of the movable table having the above-mentioned construction is described with reference to FIG. 1 and FIG. 2.

Rotational motion of the motor 5 is changed into rectilinear motion by the ball thread 6. The rectilinear motion is transmitted to the movable block 3. The balls 7 are circulated through the ball travelling passage 8a formed by ball travelling grooves 2 and 8, and the ball circulation passage 9. For actual use, a pre-load is applied on the ball-and-roller bearing formed by the guide rail 1, the movable block 3 and balls 7, in order to prevent an undesirable small downward motion of the movable block 3 when a load is applied on the movable table. When the pre-load is applied on the ball-and-roller bearing and the external force operates to the movable block 3, a tensile force is applied on the lower thin part 11 of the movable block 3. On the other hand, to the upper thin part 12 of the movable block 3, a force in horizontal and inward direction is applied. However, although the movable block 3 is provided with the hole 10, the upper and lower thin parts 11 and 12 have enough thickness, hence enough strength, to withstand the above-mentioned forces. Furthermore, since the guide rail 1 does not have hollow parts, it is very strong against the external force from horizontal direction. And therefore, the spacing between the ball travelling grooves 2, 8 and balls 7 is not made.

As mentioned above, according the present invention, it is possible to apply the pre-load between the ball travelling grooves 2, 8 and balls 7, and to keep a proper pre-loaded state, even when the external force is applied on the movable block 3. Because the guide rail 1 with two grooves 2 and the movable block 3 are combined, and because the lower part 11 and the upper parts 12 of the movable block 3 gives enough strength to withstand the load without bending to the movable block 3.

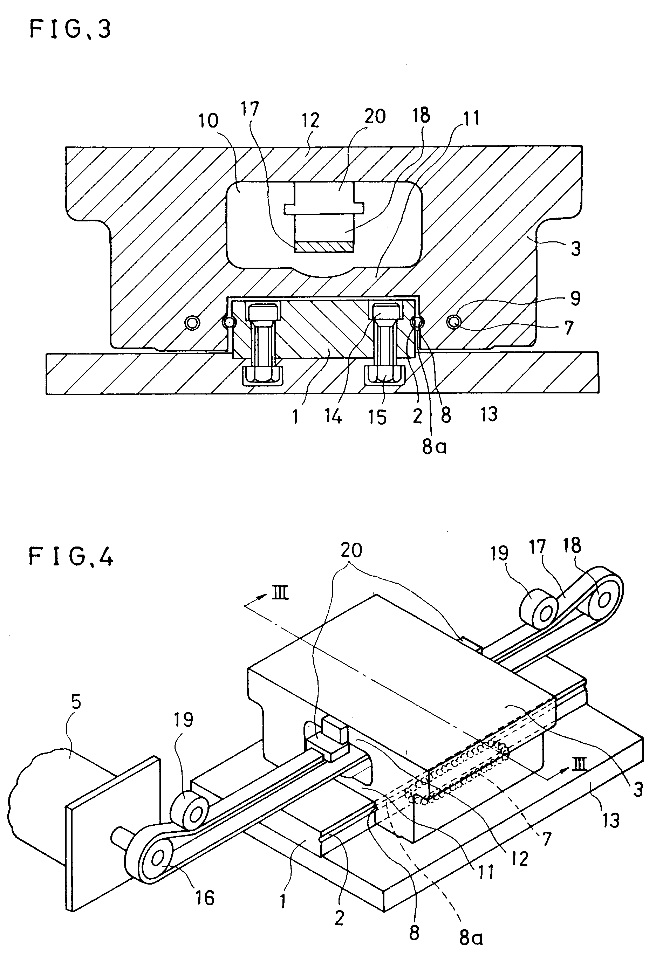

Next, FIG.3 shows a movable table as another embodiment of the present invention, and FIG.4 is a perspective view thereof. The movable table of this embodiment is different from the first embodiment shown in FIG.1 and FIG.2 in that a driving means comprises a motor 5, a driving pulley (gear) 16, a timing belt 17, a subordinate pulley 18, an idle pulleys 19, and a timing belt fixing part 20 for fixing the timing belt 17 to the movable block 3. And other parts are almost the same as the first embodiment.

In the movable table having the above-mentioned construction, a rotary motion is changed into a rectilinear motion by the driving pulley 16 and the timing belt 17. The rectilinear motion is transmitted to the movable block 3 through the timing belt fixing part 20 connecting the timing bolt to the movable block 3. The timing belt 17 can performs a reciprocating motion along with hole 10.

As mentioned above, by using the driving means comprising the motor 5, the driving pulley 16 and the timing pulley 17, it is possible to obtain the same effects as that of the first embodiment.

In the above-mentioned embodiments, the balls 7 can be replaced by rollers.

## Claims

1. A movable table comprising a guide rail (1) extending in horizontal direction and being positioned in a straight opening of a block (3) movable along said guide rail (1), linear bearing means (2,8,7,8a,9) provided between the vertical side surfaces of the guide rail (1) and the opposing vertical side surfaces of said block (3), said block (3) being movable by driving means (5) through power transmitting means (6) positioned in said block (3),
characterized in that
said movable block (3) is generally rectangular having a hole (10) in the moving direction thereof in which the power transmitting means (6) is positioned, and comprising an upper part (12) and a lower part (11) giving enough strength to prevent bending of both sides of said block (3), said straight opening receiving said guide rail (1) is formed in said lower part (11) of said block (3), and that said guide rail (1) is a solid body not having hollow parts.

2. Movable table according to claim 1,
characterized in that
said linear bearing means comprise ball travelling grooves (2) in the vertical side surfaces of said guide rail (1) forming ball travelling passages (8a) in cooperation with opposing ball travelling grooves (8) formed in the vertical side surfaces of said movable block (3), ball circulation passages (9) in said movable block (3), and balls (7) circulating in the ball travelling passages (8a) and in the ball circulation passages (9) when said movable block (3) is driven.

3. Movable table according to claim 1 or 2,
characterized in that
said driving means (5) comprise a motor, and said power transmitting means (6) comprise a screw bolt (6a) connected to said motor (5), a nut part (6b) on said screw bolt (6a) and a screw bolt bearing (6c), said nut part (6b) being connected to said movable block (3).

4. Movable table according to anyone of claims 1 or 2, characterized in that
said driving means (5) comprise a motor (5) and said power transmitting means (6) comprise a belt (17) disposed penetrating the hole (10) in the movable block (3), both ends of said belt (17) being fixed to said movable block (3), and a pair of pulleys (16, 18) disposed on both sides of said movable block (3) for enabling running of said belt (17) therearound, one of said pair of pulleys (16, 18) being connected to said motor (5).

## Patentansprüche

1. Beweglicher Tisch, umfassend eine Führungsschiene (1), die sich in horizontaler Richtung erstreckt und in einer geraden Öffnung eines Blocks (3) angeordnet ist, der entlang der Führungsschiene (1) beweglich ist, wobei lineare Lagermittel (2,8,7,8a,9) zwischen den vertikalen Seitenflächen der Führungsschiene (1) und den gegenüberliegenden vertikalen Seitenflächen des Blocks (3) vorgesehen sind, und wobei der Block (3) durch eine Antriebseinrichtung (5) über eine Energieübertragungseinrichtung (6) bewegbar ist, die in dem Block (3) angeordnet ist,
dadurch gekennzeichnet, daß
der bewegliche Block (3) allgemein rechteckig ist, ein Loch (10) in seiner Bewegungsrichtung hat, in welchem die Energieübertragungseinrichtung (6) angeordnet ist, und einen oberen Teil (12) und einen unteren Teil (11) aufweist, die ausreichende Festigkeit verleihen, um ein Biegen beider Seiten des Blocks (3) zu verhindern, wobei die gerade Öffnung, welche die Führungsschiene (1) aufnimmt, in dem unteren Teil (12) des Blocks (3) gebildet ist und die Führungsschiene (1) ein massiver Körper ist, der keine hohlen Teile hat.

2. Beweglicher Tisch nach Anspruch 1,
dadurch gekennzeichnet, daß
die linearen Lagermittel Kugellaufnuten (2) in den vertikalen Seitenflächen der Führungsschiene (1) aufweisen, welche Kugellaufdurchgänge (8a) bilden im Zusammenwirken mit gegenüberliegenden Kugellaufnuten (8), die in den vertikalen Seitenflächen des beweglichen Blocks (3) gebildet sind, wobei Kugelumlaufdurchgänge (9) in dem beweglichen Block (3) gebildet sind und Kugeln (7) in den Kugellaufdurchgängen (8a) und in den Kugelumlaufdurchgängen (9) umlaufen, wenn der bewegliche Block (3) angetrieben wird.

3. Beweglicher Tisch nach Anspruch 1 oder 2,
dadurch gekennzeichnet, daß
die Antriebseinrichtung (5) einen Motor aufweist und die Energieübertragungseinrichtung (6) einen Schraubenbolzen (6a), der mit dem Motor (5) verbunden ist, einen Mutterteil (6b) an dem Schraubenbolzen(6a) und ein Schraubenbolzenlager (6c) aufweist, wobei der Mutterteil (6b) mit dem beweglichen Block (3) verbunden ist.

4. Beweglicher Tisch nach Anspruch 1 oder 2,
dadurch gekennzeichnet, daß
die Antriebseinrichtung (5) einen Motor (5) aufweist und die Energieübertragungseinrichtung (6) einen Riemen (17), der in das Loch (10) in dem beweglichen Block (3) eintretend angeordnet ist und dessen beide Enden an dem beweglichen Block (3) befestigt sind, und ein Paar von Riemenscheiben (16,18) aufweist, die auf beiden Seiten des beweglichen Blocks (3) angeordnet sind, um das Laufen des Riemens (17) um sie herum zu ermöglichen, wobei eine des Paares von Riemenscheiben (16,18) mit dem Motor (5) verbunden ist.

## Revendications

1. Table mobile comprenant un rail de guidage (1) s'étendant dans la direction horizontale et placé dans une ouverture rectiligne d'un bloc (3) mobile le long dudit rail de guidage (1), un moyen de palier linéaire (2, 8, 7, 8a, 9) prévu entre les surfaces latérales verticales du rail de guidage (1) et les surfaces latérales verticales opposées dudit bloc (3), ledit bloc (3) étant mobile sous l'effet d'un moyen d'entraînement (5) par l'intermédiaire d'un moyen de transmission de puissance (6) placé dans ledit bloc (3),
caractérisé en ce que :
- ledit bloc mobile (3) est généralement rectangulaire, ayant un trou (10) ménagé dans son sens de déplacement, dans lequel le moyen de transmission de puissance (6) est placé, et comportant une partie supérieure (12) et une partie inférieure (11) qui confèrent une résistance mécanique suffisante pour éviter la flexion des deux côtés dudit bloc (3), ladite ouverture rectiligne recevant ledit rail de guidage (1) est pratiquée dans ladite partie inférieure (11) dudit bloc (3), et en ce que ledit rail de guidage (1) est un corps solide ne présentant aucune partie creuse.

2. Table mobile selon la revendication 1,
caractérisée en ce que :
- ledit moyen de palier linéaire comprend des rainures (2) de roulement de billes dans les surfaces latérales verticales dudit rail de guidage (1) formant des passages (8a) pour le roulement de billes en coopération avec des rainures opposées (8) de roulement de billes pratiquées dans les surfaces latérales verticales dudit bloc mobile (3), des passages (9) pour la circulation de billes dans ledit bloc mobile (3), et des billes (7) circulant dans le passage (8a) de roulement de billes et dans les passages (9) de circulation de billes lorsque ledit bloc mobile (3) est entraîné.

3. Table mobile selon la revendication 1 ou 2,
caractérisée en ce que :
- ledit moyen d'entraînement (5) comprend un moteur, et ledit moyen de transmission de puissance (6) comporte un boulon fileté (6a) relié audit moteur (5), une partie à écrou (6b) sur ledit boulon fileté (6a) et un palier (6c) pour boulon fileté, ladite partie à écrou (6b) étant reliée audit bloc mobile (3).

4. Table mobile selon revendication 1 ou 2, caractérisée en ce que :
- ledit moyen d'entraînement (5) comprend un moteur (5) et ledit moyen de transmission de puissance (6) comporte une courroie (17) disposée de manière à pénétrer le trou (10) du bloc mobile (3), les deux extrémités de ladite courroie (17) étant fixées audit bloc mobile (3), et une paire de poulies (16, 18) disposées sur les deux côtés dudit bloc mobile (3) pour permettre le passage de ladite courroie (17) sur leur pourtour, une poulie de ladite paire de poulies (16, 18) étant reliée audit moteur (5).
